# NOUVEAU FASCICULE DE BREVET EUROPEEN

(11) **EP 0 485 296 B2**
(45) Date de publication et mention de la décision concernant l'opposition: **07.07.1999**
(45) Mention de la délivrance du brevet: 26.01.1994
(21) Numéro de dépôt: 91403002.8
(22) Date de dépôt: 07.11.1991
(51) Int. Cl.: A01B 59/042, B60D 1/155

(54) **Système d'attelage entre un tracteur et une remorque du type semi-portée**
Kupplungssystem zwischen Schlepper und einem Halbanbau-Anhänger
Towing system between tractor and semi-mounted trailer

(30) Priorité: 09.11.1990 FR 9014099
(43) Date de publication de la demande: 13.05.1992
(73) Titulaire: LUCAS G. S.A., F-85130 La Verrie (FR)
(72) Inventeur: Lucas, Gérard, F-85130 La Verrie (FR); Retailleau, Jean-Claude, F-85130 La Verrie (FR)
(74) Mandataire: Le Brusque, Maurice

(56) Documents cités:
- DE-A- 2 355 062
- DE-A- 3 316 128
- DE-A- 3 506 637
- FR-A- 2 256 714
- FR-A- 2 363 023
- FR-A- 2 546 825
- GB-A- 1 040 901
- US-A- 2 879 079
- US-A- 4 662 646
- Prospectus "Quality trailed sprayers" de la Sté Knight

## Description

La présente invention concerne un système d'attelage entre un tracteur et une remorque du type semi-portée, à essieu positionné dans la moitié arrière par exemple ; elle concerne plus particulièrement un perfectionnement au système d'attelage d'une remorque agricole qui se charge par l'arrière au moyen par exemple d'une pelle hydraulique.

Ces remorques agricoles, connues sous le nom de désileuses, sont constituées d'une benne ouverte à l'arrière et munies, à l'avant, d'un dispositif de distribution du produit contenu dans la benne. Une pelle hydraulique permet le remplissage de cette benne ; cette pelle est articulée sur des bras montés sur les flancs de ladite benne. Ce type de remorque est généralement amené à proximité et même contre le front de taille du silo au moyen d'un tracteur. La commande des opérations de reprise des produits dans le silo s'effectue à partir du tracteur ou d'un poste de manoeuvre aménagé sur la benne.

La conduite du tracteur et les manoeuvres avec de telles bennes, parfois de très grande capacité, peuvent poser des problèmes liés à l'exiguïté des lieux d'utilisation.

Le système d'attelage selon l'invention permet notamment de rendre plus aisée la conduite de ce type de remorque, en facilitant en particulier les manoeuvres dans des bâtiments qui sont parfois exigus voire en cul de sac. Il permet surtout d'améliorer la précision de conduite lors des manoeuvres en marche avant et principalement en marche arrière.

Selon un mode de réalisation particulier, le dispositif d'attelage permet de faire en sorte qu'en conduite normale de traction, les roues de la remorque suivent sensiblement les traces des roues arrière du tracteur. Le rayon de braquage de l'ensemble est amélioré et le matériel peut être plus opérationnel dans des bâtiments exigus.

Des systèmes d'attelage de ce genre existent notamment dans le domaine du matériel de pulvérisation, comme décrit par exemple dans le document DE-33 16 128.

Cependant, pour faciliter les manoeuvres en marche arrière, il est plus commode de disposer d'un timon et d'articuler ce timon le plus près possible du tracteur. Pour cela, il est nécessaire de disposer de deux axes de lacets entre le tracteur et la remorque.

La présente invention propose des moyens qui permettent de sélectionner d'une manière pratique, l'un ou l'autre des axes de lacets afin d'adapter la longueur du timon aux besoins et en particulier aux travaux à effectuer avec la remorque.

Le système d'attelage selon l'invention comprend un bras de liaison, ou timon, qui est interposé entre la remorque et la barre d'attelage qui est fixée et articulée sur les bras de relevage du tracteur, lequel bras comporte des moyens d'articulation autour d'un axe de roulis et autour de deux axes de lacets : un axe de lacet qui est interposé entre la face avant de la remorque et ledit bras de liaison et - un axe de lacet qui est interposé entre ladite barre d'attelage et ledit bras, lequel système d'attelage comporte des moyens de verrouillage de l'un ou l'autre desdits axes de lacets, lesquels moyens de verrouillage consistent en un loquet coulissant, monté sur le bras de liaison, entre les deux axes de lacets, lequel loquet est associé à des moyens de manoeuvre qui permettent de bloquer l'un des axes de lacets et, dans le même temps, de libérer l'axe de lacet homologue.

Ainsi, en conduite normale de traction, l'axe de lacet libre est celui situé au niveau de la face avant de la remorque. Etant donné les rapports de distance, les roues de la remorque suivent sensiblement les traces des roues arrière du tracteur. En marche arrière, on peut changer l'axe de lacet pour augmenter la longueur de la flèche de la remorque. L'axe libéré est alors situé au niveau de la barre d'attelage du tracteur.

Selon une autre disposition de l'invention, le loquet coulissant est solidaire du bras de liaison et vient verrouiller l'un ou l'autre des axes de lacet en s'engageant dans une échancrure réalisée au niveau des chapes de maintien des axes. Ces chapes sont solidaires, pour l'une, de la barre d'attelage, et pour l'autre, de l'avant de la remorque.

Selon une autre disposition préférentielle les chapes qui sont devant le loquet, sont taillées en arcs de cercle centrés sur l'axe de lacet correspondant ; ces arcs de cercle sont situés de part et d'autre de l'échancrure pour guider l'extrémité du loquet et agir comme sécurité en interdisant, lors de ses manoeuvres, tout désengagement intempestif dudit loquet, tant que l'alignement n'est pas parfait entre le tracteur et la remorque.

Toujours selon l'invention, les moyens de manoeuvre du loquet agissent de façon à le pousser automatiquement dans l'un ou l'autre des échancrures prévues, lorsqu'elle se présente face audit loquet. Ces moyens peuvent être en forme de vérin hydraulique associé à un accumulateur ; ils peuvent également être en forme de levier de sélection solidaire du bras de liaison et dont l'extrémité est reliée audit loquet par l'intermédiaire d'un moyen de rappel en forme de ressort spirale.

Mais l'invention sera encore illustrée, sans être aucunement limitée, par la description suivante de différents modes de réalisation, donnés à titre indicatif, et représentés sur les dessins annexés dans lesquels :
- la figure 1 est une vue de côté du tracteur et de la remorque,
- la figure 2 est une vue de dessus montrant le tracteur et sa remorque en position alignée et en position braquée, l'axe de lacet sélectionné étant celui de la conduite normale en traction,
- la figure 3 est une vue de dessus du système d'attelage seul,
- la figure 4 est une vue de côté du système d'attelage représenté figure 3,
- la figure 5 est une vue schématique d'une variante des moyens de manoeuvre du loquet coulissant.

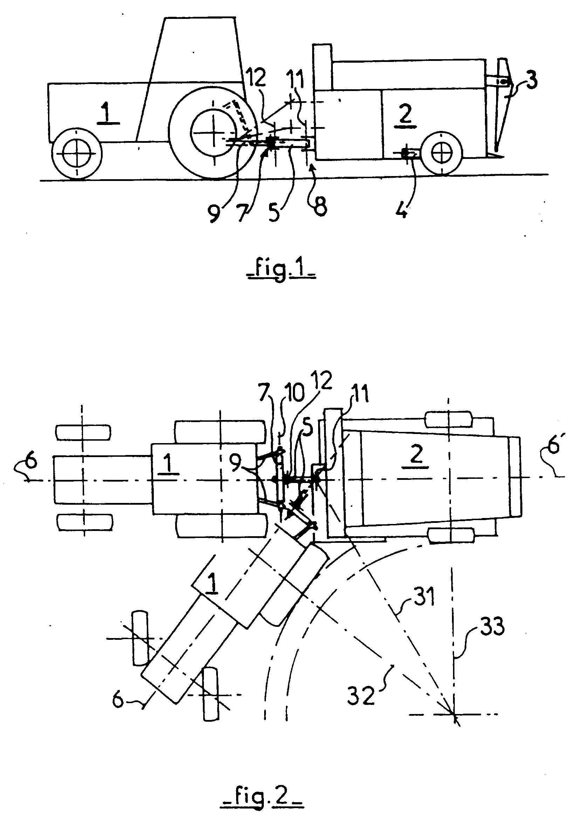

La figure 1 représente, de façon schématique, un tracteur 1 auquel est attelée une remorque 2 du type désileuse semi-portée, à chargement arrière au moyen d'une pelle 3 montée sur des bras articulés. La remorque 2 comporte un essieu 4 disposé dans la moitié arrière.

Le système d'attelage comprend, figures 1 et 2, un bras de liaison 5 disposé, dans la position représentée, dans le plan longitudinal médian 6 du tracteur. Ce bras de liaison 5 est interposé entre la barre d'attelage 7 sur le tracteur et la partie frontale 8 de la remorque 2. La barre d'attelage 7 est fixée, de façon classique, sur les bras de relevage 9 du tracteur. Cette barre 7 peut pivoter autour de l'axe horizontal 10, perpendiculaire au plan vertical médian 6 du tracteur ; cet axe horizontal 10 constitue l'axe de tangage.

Le bras de liaison 5 comporte, à chacune de ses extrémités, un axe d'articulation, sensiblement vertical qui constitue l'axe de lacet. L'axe de lacet 11 est positionné au centre de la face frontale 8 de la remorque 2 et l'axe de lacet 12 est positionné au niveau de la barre d'attelage 7. Ces deux articulations permettent à la remorque de pivoter autour de l'un ou l'autre des axes 11, 12 en fonction des manoeuvres désirées.

Ce même bras de liaison 5 est encore articulé sur la barre d'attelage 7 autour d'un axe 13 sensiblement horizontal, situé sur les figures, dans le plan médian 6 du tracteur ; cet axe constitue l'axe de roulis. Cet axe 13 peut de la même façon, être disposé entre le bras 5 et la partie frontale 8 de la remorque, dans le plan médian 6' de ladite remorque.

Le bras 5 forme, avec la barre d'attelage 7 et les bras 9 de relevage du tracteur, un joint qui permet tous les mouvements de lacets, roulis et tangage entre la remorque et le tracteur.

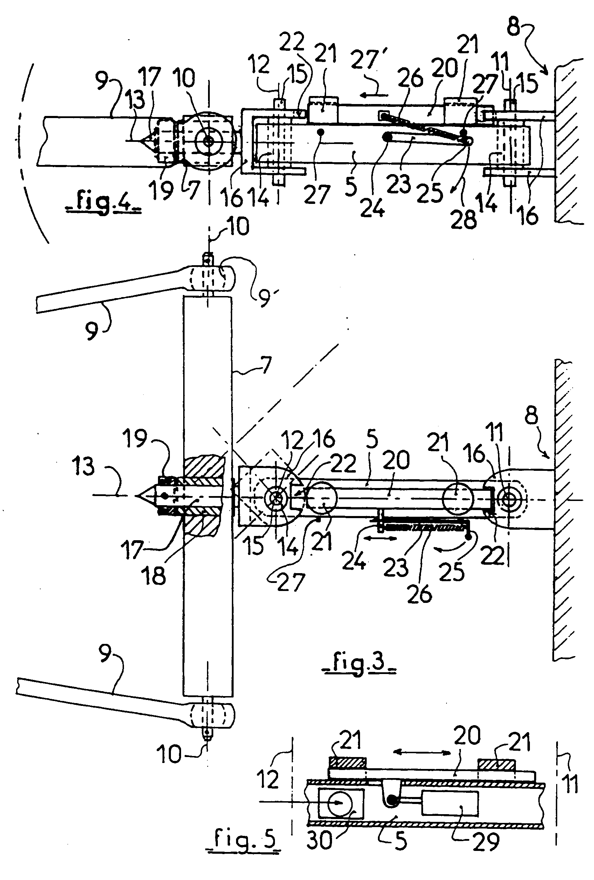

On a représenté, figures 3 et 4, le système d'attelage 7 seul.

Le bras de liaison 5 se présente sous la forme d'un tronçon de tube à section carrée ou d'un caisson réalisé en tôles soudées par exemple. Ce bras 5 comporte, à ses extrémités avant et arrière, une douille verticale 14 qui coopère avec un axe 15 maintenu de façon appropriée dans un système de chapes 16 qui lui, est solidaire de la partie avant 8 de la remorque, pour constituer l'articulation correspondant à l'axe de lacet 11, et de la barre d'attelage 7 pour constituer l'articulation correspondant à l'axe de lacet 12.

Dans l'exemple de réalisation représenté, l'extrémité avant du bras 5, côté tracteur, comporte un système de chapes 16 muni d'un axe 17 qui tourne autour de l'axe de roulis 13 ; cet axe 17 traverse la barre d'attelage 7 et il est monté dans une douille 18 solidaire de ladite barre d'attelage. L'extrémité avant de l'axe 17 comporte des moyens d'immobilisation en forme de bague 19 goupillée de façon à rendre solidaire le bras 5 de la barre d'attelage 7 avec une liberté de mouvement autour de l'axe longitudinal 13 de roulis.

La barre d'attelage 7 se présente sous la forme d'un tube ou caisson allongé de section sensiblement carrée, réalisé par exemple en tôles soudées. Ce caisson comporte, dans sa partie médiane, la douille 18 qui sert au guidage de l'axe 17 situé à la partie avant du bras 5. Cette douille 18 est centrée sur l'axe longitudinal 13, perpendiculaire à l'axe longitudinal médian 10 de tangage de la barre d'attelage 7.

Cette barre 7 est montée dans les bras de relevage 9 du tracteur, de façon classique, c'est-à-dire dans des rotules 9' avec une possibilité de rotation autour de l'axe 10 de tangage. On obtient ainsi, une liberté de mouvement lors des oscillations de la barre d'attelage compte-tenu des défauts de terrain ou lors de manoeuvres spécifiques.

La longueur du bras de liaison 5 peut être comprise entre 0,5 et 1,50 m environ. Cette longueur doit être compatible avec les tailles et dimensions des appareils en cause et de façon aussi à conserver un rayon de braquage suffisant pour l'équipage ainsi formé. Les dispositions similaires prévues à chaque extrémité du bras 5 confèrent audit bras deux possibilités d'articulation autour des axes de lacets verticaux 11 et 12 précités. Une seule de ces articulations 11, 12 est utilisée et ceci en fonction des manoeuvres désirées. Le dispositif selon l'invention comporte donc des moyens de verrouillage de l'un ou l'autre des axes de lacet 11, 12, permettant une sélection alternative desdits axes.

Dans l'exemple de réalisation représenté figures 3 à 5, ces moyens de verrouillage consistent en un loquet coulissant 20 en forme de barre métallique, monté sur le bras de liaison 5 dans deux guides 21. Le loquet 20 est monté entre les deux axes de lacet 11 et 12 ; il a la possibilité devenir s'engager par coulissement dans des échancrures 22 réalisées dans les chapes 16 disposées aux extrémités du bras 5.

On comprend bien que l'intégration du loquet 20 dans l'échancrure 22 permet de bloquer l'axe de lacet correspondant ; la longueur du loquet 20 est telle qu'une fois positionné dans l'une des échancrures 22, il soit complètement dégagé de l'échancrure 22 homologue.

La position du loquet 20 permet ainsi de sélectionner l'axe de lacet 11 ou 12 en fonction des manoeuvres.

La manoeuvre du loquet 20 est réalisée lorsque le plan médian du tracteur et celui de la remorque sont alignés, c'est-à-dire lorsque les échancrures homologues 22 sont disposées en vis à vis. Dans le cas contraire, la forme particulière des chapes 16, en arc de cercle, de part et d'autre des échancrures 22, condamne tout mouvement de déverrouillage. Ces arcs de cercle sont centrés sur les axes de lacet 11, 12 correspondants ; ils sont situés de part et d'autre de l'échancrure 22.

La manoeuvre du loquet 20 peut être réalisée de différentes façons. Les figures 3 et 4 montrent un mode de réalisation possible de ces moyens de manoeuvre. Ces moyens sont constitués d'un levier de sélection 23 articulé en 24 au niveau de la partie centrale du bras 5 et muni à son autre extrémité d'une poignée de manoeuvre 25. L'extrémité du levier 23 correspondant à la poignée 25 est reliée au loquet 20 par l'intermédiaire d'un moyen de rappel du type ressort spirale 26. Deux butées 27 permettent de limiter le secteur de manoeuvre du levier 23 ; elles sont disposées de façon à permettre un verrouillage automatique de la position dudit lever sous l'effet du ressort 26 tendu entre le loquet 20 et la poignée 25.

Le fait de faire pivoter le levier 23 autour de son axe d'articulation 24 permet de réaliser une traction sur le loquet 20, par l'intermédiaire du ressort 26, dans le même sens que le déplacement du levier 23. La figure 4 montre le sens du déplacement 27' du loquet 20 réalisé par un mouvement du levier 23 représenté par la flèche 28. Sous l'effet du ressort 26, le loquet 20 se met automatiquement en position dans l'échancrure 22 ad hoc, dès que le tracteur et la remorque sont alignés, par un mouvement rapide et sec.

Un autre moyen de manoeuvre du loquet 20 a été représenté schématiquement figure 5. Dans ce mode de réalisation, le déplacement du loquet 20 dans ses guides coulissants 21 fixes est commandé à distance parl'intermédiaire d'un vérin hydraulique 29 connecté de préférence à un accumulateur 30 qui permet de temporiser le mouvement dudit loquet si le tracteur et la remorque ne sont pas alignés. Bien entendu d'autres modes de réalisation peuvent être envisagés, du type mécanique ou encore au moyen d'électro-aimants.

On a représenté, figure 2, le tracteur 1 en conduite normale de traction, en position alignée avec la remorque et en position braquée.

Dans ce cas, l'axe avant 12 est verrouillé par le loquet 20 et c'est l'axe vertical arrière 11 qui joue le rôle d'axe de lacet. Le bras 5 est ainsi disposé en permanence sur l'axe médian 6 du tracteur ; il forme un T avec la barre d'attelage 7. On remarque, sur cette figure, que l'axe de lacet 11 du bras de liaison 5, sur l'avant de la remorque, se situe sensiblement dans le plan bisecteur 31 qui sépare l'axe 32 des roues arrière du tracteur et l'axe 33 des roues de la remorque 2. Cette disposition constructive permet de faire rouler les roues de la remorque 2 sensiblement dans les traces des roues arrière du tracteur, ce qui facilite grandement les manoeuvres de ce genre de machine. En fait, le rapport entre les distances qui séparent l'axe 11 de l'axe 32 d'une part et l'axe 33 d'autre part est voisin de 1, compris entre 0,75 et 1,25 environ.

On remarque que dans la position normale de traction, le bras 5 est sensiblement horizontal, dans le prolongement des bras de relevage 9 du tracteur.

Si l'on désire faciliter la marche arrière et en particulier les manoeuvres en marche arrière, on allonge la flèche de la remorque, c'est-à-dire la distance entre l'axe de lacet et l'axe 33 des roues de la remorque. Cette opération est réalisée en alignant les axes médians du tracteur et de sa remorque et en actionnant le loquet 20 vers l'arrière pour verrouiller l'axe 11 et libérer l'axe 12.

Cette manoeuvre, toute simple, permet de faciliter grandement les opérations de manoeuvre en marche arrière et notamment les opérations de réglage de la position de la remorque dans des endroits exigüs.

Les signes de référence insérés après les caractéristiques techniques mentionnées dans les revendications ont pour seul but de faciliter la compréhension de ces dernières et n'en limitent aucunement la portée.

## Revendications

1. Système d'attelage entre un tracteur et une remorque du type semi-portée, comprenant un bras (5) de liaison interposé entre ladite remorque et une barre d'attelage (7) fixée et articulée sur les bras de relevage (9) dudit tracteur, ledit bras comportant des moyens d'articulation autour d'un axe de roulis et autour de deux axes de lacets : un axe de lacet (11) interposé entre la face avant (8) de la remorque et ledit bras (5), et un axe de lacet (12) interposé entre ladite barre d'attelage (7) et ledit bras (5), lequel système d'attelage comporte des moyens de verrouillage de l'un ou l'autre des axes de lacets (11, 12), caractérisé en ce que ces moyens de verrouillage consistent en un loquet (20) coulissant, monté sur le bras (5), entre les deux axes de lacets (11, 12), lequel loquet (20) est associé à des moyens de manoeuvre permettant le blocage de l'un des axes (11, 12) et la libération de l'axe homologue (11, 12).

2. Système d'attelage selon la revendication 1, caractérisé en ce que le loquet (20) coulissant est solidaire du bras (5) de liaison et vient verrouiller l'un ou l'autre axe de lacet (11, 12) en s'engageant dans une échancrure (22) réalisée au niveau des chapes (16) de maintien des axes (15), solidaires, pour l'une, de la barre d'attelage (7) et pour l'autre de l'avant (8) de la remorque.

3. Système d'attelage selon la revendication 2, caractérisé en ce que, de part et d'autre de l'échancrure (22), le profil de la chape (16) est en arc de cercle de façon à maintenir la sélection du loquet (20) en cas de désalignement même léger des axes médians du tracteur et de la remorque.

4. Système d'attelage selon l'une quelconque des revendications 1 à 3, caractérisé en ce qu'il comporte des moyens de manoeuvre du loquet (20) consistant en un levier de sélection (23) solidaire et articulé sur le bras (5) à l'une de ses extrémités, et dont l'autre extrémité est reliée au loquet (20) par l'intermédiaire d'un moyen de rappel du type ressort spirale (26), qui déplace automatiquement ledit loquet dans l'échancrure ad hoc lorsqu'elle se présente.

5. Système d'attelage selon l'une quelconque des revendications 1 à 3, caractérisé en ce qu'il comporte des moyens de manoeuvre automatique du loquet (20) consistant en un vérin hydraulique (29) associé à un accumulateur (30) de façon à le déplacer automatiquement dans l'échancrure ad hoc lorsqu'elle se présente.

## Claims

1. A towing system between a tractor and a trailer of the semi-supported type, comprising a connecting arm (5), located between said trailer and a hitching bar (7) mounted on and articulated to the lifting arms (9) of said tractor, said arm (5) comprising articulation means about a roll axis and two yaw axes : a yaw axis (11) located between the front face (8) of the trailor and said arm (5), and a yaw axis (12) located between said hitching bar (7) and said arm (5), said towing system comprises means for locking one or other of the yaw axes (11, 12), characterized in that the locking means consist of a sliding latch (20), mounted on the arm (5) between the two yaw axes (11, 12), the said latch (20) being connected to operating means which enable the locking of one of the axis (11, 12) and the freeing of the other axis (11, 12).

2. A towing system according to claim 1, characterized in that the sliding latch (20) is integral with the connecting arm (5) and locks one or the other of the yaw axes (11, 12) by engaging in a notch (22) formed at the forks (16) that retain pins (15), one of the forks being integral with the hitching bar (7) and the other with the front (8) of the trailor.

3. A towing system according to claim 2, characterized in that the profile of the fork (16) on both sides of the notch (22) is that of an arc of a circle so that the selection of the latch (20) is maintained whenever the median axis of the tractor and trailer are not in alignment, even if only slightly so.

4. A towing system according to any one of claims 1 to 3, characterized in that it comprises means for operating the latch (20), said means consisting of a selection lever (23) integral with and articulated on the arm (5), at one of its ends, the other end of the lever (23) being connected to the latch (20) by the intermediary of a return means of the spiral spring type (26), which automatically displaces said latch into the appropriate said notch when the notch presents itself.

5. A towing system according to any one of claims 1 to 3, characterized in that it comprises means for automatically operating the latch (20), said means consisting of a hydraulic jack (29) connected to a hydraulic accumulator (30) in such a manner as to automatically displace the latch into the appropriate said notch when the notch presents itself.

## Patentansprüche

1. Kupplungssystem zwischen einem Traktor und einem Halbanbau-Anhänger mit einem Verbindungsarm (5) zwischen dem Anhänger und einer Kupplungsstange (7), die auf den Hebearmen (9) des Traktors gelenkig befestigt ist, wobei der Arm (5) Gelenkmittel um eine Schlingerachse sowie um zwei Spitzkehrenachsen, und zwar um eine zwischen der Vorderseite (8) des Anhängers und dem Verbindungsarm (5) angeordnete Spitzkehrenachse (11) und um eine zwischen der Kupplungsstange (7) und dem Verbindungsarm (5) angeordnete Spitzkehrenachse (12), aufweist, wobei das Kupplungssystem Mittel zum Verriegeln der einen oder anderen Spitzkehrenachse (11, 12) aufweist, dadurch gekennzeichnet, daß die Vertiegelungsmittel aus einer gleitenden Klinke (20) bestehen, die zwischen den beiden Spitzkehrenachsen (11, 12) am Arm (5) befestigt ist, wobei die Klinke (20) mit Betätigungsmitteln verbunden ist, die ein Blockieren einer der Achsen (11, 12) und ein Freisetzen der homologen Achse (11, 12) ermöglichen.

2. Kupplungssystem nach Anspruch 1, dadurch gekennzeichnet, daß die Gleitklinke (20) mit dem Verbindungsarm (5) fest verbunden ist und die eine oder andere Spitzkehrenachse (11, 12) dadurch verriegelt, daß sie in eine Aussparung (22) eingreift, die an den einerseits mit den Kupplungsstangen (7) und andererseits mit der Vorderseite (8) des Anhängers fest verbundenen Gelenkgabeln (16) zum Halten der Achsen (15) ausgebildet ist.

3. Kupplungssystem nach Anspruch 2, dadurch gekennzeichnet, daß beidseits der Aussparung (22) das Profil der Gelenkgabeln (16) als Kreisbogen ausgebildet ist derart, daß die Auswahl der Klinke (20) bei einem auch nur leichten Nichtfluchten der mittleren Achsen des Traktors und des Anhängers beibehalten bleibt.

4. Kupplungssystem nach einem der Ansprüche 1-3, dadurch gekennzeichnet, daß Mittel zum Betätigen der Klinke (20) vorgesehen sind, die aus einem Wählhebel (23) bestehen, der mit dem Arm (5) fest verbunden und mit einem seiner Enden daran angelenkt ist, und dessen anderes Ende mit der Klinke (20) über ein Rückholmittel vom Typ einer Spiralfeder (26) verbunden ist, die die Klinke selbsttätig und ad hoc in die Aussparung verschiebt, wenn die Aussparung in Position ist.

5. Kupplungssystem nach einem der Ansprüche 1-3, dadurch gekennzeichnet, daß Mittel zur automatischen Betätigung der Klinke (20) vorgesehen sind, die aus einem Hydraulikzylinder (29) bestehen, der mit einem Akkumulator (30) derart verbunden ist, daß die Klinke automatisch und ad hoc in die Aussparung bewegt wird, sobald die Aussparung in Position ist.
